# EUROPÄISCHE PATENTSCHRIFT

(11) **EP 2 209 679 B1**
(45) Veröffentlichungstag und Bekanntmachung des Hinweises auf die Patenterteilung: **26.03.2014**
(21) Anmeldenummer: 08846636.2
(22) Anmeldetag: 23.09.2008
(51) Int. Cl.: B60T 8/36, F16K 31/06

(54) **VENTILPATRONE FÜR EIN MAGNETVENTIL UND ZUGEHÖRIGES MAGNETVENTIL**
VALVE CARTRIDGE FOR A SOLENOID VALVE, AND ASSOCIATED SOLENOID VALVE
CARTOUCHE POUR UNE ÉLECTROVANNE ET ÉLECTROVANNE CORRESPONDANTE

(30) Priorität: 08.11.2007 DE 102007053299
(43) Veröffentlichungstag der Anmeldung: 28.07.2010
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2008/062666
(87) Internationale Veröffentlichungsnummer: WO 2009/059843

(56) Entgegenhaltungen:
- WO-A-2007/033855
- DE-A1- 19 711 375
- DE-A1- 19 946 996

## Beschreibung

### Stand der Technik

Die Erfindung betrifft eine Ventilpatrone für ein Magnetventil nach der Gattung des unabhängigen Patentanspruchs 1, und ein zugehöriges Magnetventil.

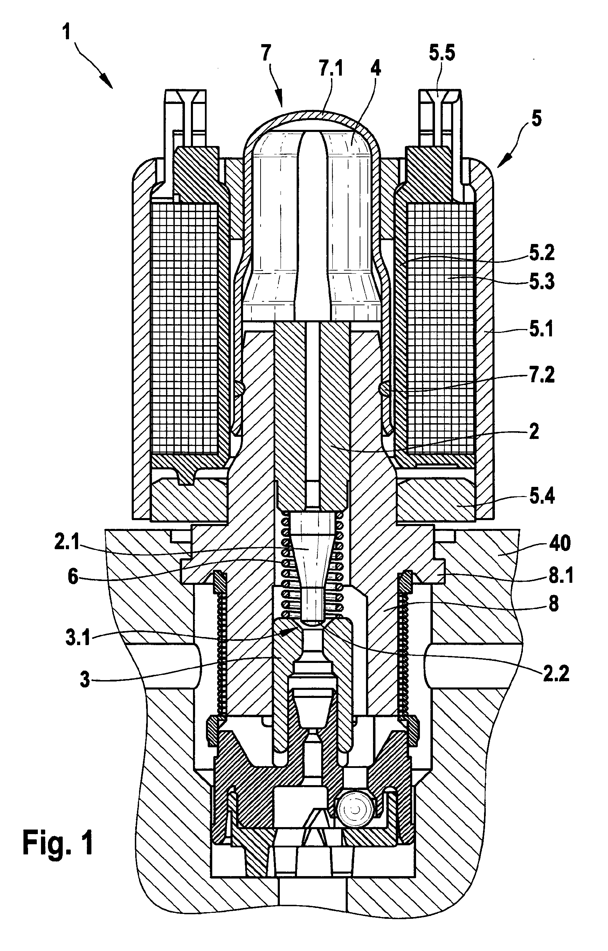

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliches Magnetventil 1, das beispielsweise als stromlos offenes Regelventil ausgeführt ist, eine Magnetbaugruppe 5 zur Erzeugung eines Magnetflusses, die einen Gehäusemantel 5.1, einen Wicklungsträger 5.2, eine Spulenwicklung 5.3 und eine Abdeckscheibe 5.4 umfasst, und eine Ventilpatrone 7, die eine Kapsel 7.1, einen mit der Kapsel 7.1 über eine Dichtschweißung 7.2 verbundenen Ventileinsatz 8, einen Magnetanker 4 mit einem Stößel 2, der ein Schließelement 2.1 und ein Dichtelement 2.2 aufweist, und eine Rückstellfeder 6 umfasst. Die Magnetbaugruppe 5 erzeugt durch die Bestromung der Spulenwicklung 5.3 über die elektrischen Anschlüsse 5.5 eine Magnetkraft, die den längsbeweglichen Magnetanker 4 mit dem Stößel 2 entgegen der Kraft der Rückstellfeder 6 gegen den Ventileinsatz 8 bewegt. Der Ventileinsatz 8 leitet den von der Magnetbaugruppe 5 über die Abdeckscheibe 5.4 eingeleiteten Magnetfluss axial über einen Luftspalt in Richtung Magnetanker 4. Zudem nimmt der Ventileinsatz 8 den so genannten Ventilkörper 3 auf, der einen Hauptventilsitz 3.1 umfasst, in welchen das als Dichtkalotte ausgeführte Dichtelement 2.2 dichtend eintaucht, um die Dichtfunktion des Magnetventils 1 umzusetzen. Wie weiter aus Figur 1 ersichtlich ist, führt der rotationssymmetrisch ausgeführte Ventileinsatz 8 den Stößel 2 mit dessen Dichtelement 2.2 von außen. Das bedeutet, dass der Stößel 2 mit dem Dichtelement 2.2 in einer Innenbohrung innerhalb des Ventileinsatzes 8 geführt ist. Der Ventileinsatz 8 ist zusammen mit dem Magnetanker 4 auch Teil des Magnetkreises, der von der Magnetgruppe 5 erzeugt wird. Die in der Regel nichtmagnetische Kapsel 7.1 bildet im Magnetkreis einen Nebenluftspalt. Der in der Kapsel 7.1 geführte Magnetanker 4 drückt auf einer relativ kleinen Fläche, die einen kleinen Außendurchmesser aufweist, auf den Stößel 2, der mit seinem als Dichtkalotte ausgeführten Dichtelement 2.2 im als Kegelsitz ausgeführten Hauptventilsitz 3.1 des Ventilkörpers 3 abdichtet bzw. einen definierten Spalt zur Druckmodulation freigibt. Der Ventileinsatz 8 dichtet hydraulisch nach extern ab und wird mit seiner Verstemmgeometrie 8.1 in einem Fluidblock 40 hydraulisch dicht verstemmt. Die Druckfeder 6 hält den Stößel 2 bei einem stromlosen Zustand des Magnetventils in einer geöffneten Stellung.

Solch ein Ventil findet man in der den Oberbegriff des Anspruchs 1 bildenden WO2007/033855 A1.

### Offenbarung der Erfindung

Die erfindungsgemäße Ventilpatrone für ein Magnetventil mit den Merkmalen des unabhängigen Patentanspruchs 1 hat demgegenüber den Vorteil, dass sich ein Ventileinsatz mit mindestens zwei Stegen radial an einer Kapsel abstützt, wobei ein Stößel über mindestens zwei korrespondierende Längsstege zwischen dem Ventileinsatz und der Kapsel geführt ist. Die Abmessungen der mindestens zwei Stege des Ventileinsatzes und die Abmessungen der mindestens zwei korrespondierenden Längsstege des Stößels sind aufeinander abgestimmt, so dass die Längsstege des Stößels in freigelassenen Segmenten zwischen den Stegen des Ventileinsatzes geführt sind, und die Stege des Ventileinsatzes in den freien Segmenten zwischen den Längsstegen des Stößels geführt sind. Somit ist der Stößel im Unterschied zum Stand der Technik außerhalb des Ventileinsatzes angeordnet bzw. der Ventileinsatz ist nach innen verlegt. Zudem weist der Stößel ein Schließelement mit einem Dichtelement auf und wird von einem innerhalb der Kapsel beweglich geführten Magnetanker bewegt, wobei das Dichtelement zur Ausführung einer Dichtfunktion dichtend in einen Hauptventilsitz eines Ventilkörpers eintaucht. An den als Stege ausgeführten Abstützstellen des Ventileinsatzes erfolgt eine sehr gute Einkoppelung des von einer Magnetbaugruppe erzeugten Magnetflusses. Der Stößel dichtet mit dem Dichtelement des Schließelements im Hauptventilsitz des Ventilkörpers ab, wobei die Längsstege des Stößels in den freigelassenen Segmenten des Ventileinsatzes bis zu einer Polfläche des Magnetankers geführt sind.

Durch die erfindungsgemäße Ventilpatrone wird eine vorhandene Magnetkraft effektiver für die Stößelbewegung und ein inneres Kräftegleichgewicht des zugehörigen Magnetventils verfügbar gemacht. Außerdem werden die Stößel- und die Ankerführung bei unveränderten oder ähnlichen Außenabmessungen der Ventilpatrone verbessert, indem Freiheitsgrade verringert werden. Des Weiteren sind in vorteilhafter Weise einfachere Teilegeometrien für den Ventileinsatz und den Stößel möglich, so dass alternative Fertigungsverfahren angewendet werden können, die in vorteilhafter Weise kostengünstigere und/oder präzisere Teile ergeben können. So ist es beispielsweise möglich, den Stößel aufgrund seines vergrößerten Durchmessers durch einen Metalltiefziehprozess herzustellen, um die Präzision des Stößels insbesondere im Bereich des Dichtelements zu verbessern.

Die erfindungsgemäße Ventilpatrone ermöglicht in vorteilhafter Weise eine größere Polfläche zwischen dem Ventileinsatz und dem Magnetanker mit einer größeren, verfügbaren Magnetkraft. Dies ermöglicht in vorteilhafter Weise durch mehr Freiräume bei der Nutzung eines günstigen Magnetkraftarbeitspunktes eine günstigere Auslegung eines zugehörigen Magnetventils bezüglich der Druckstellbarkeit.

Als weiterer Vorteil verleiht der vergrößerte Auflagedurchmesser des Stößels auf der Polfläche des Ankers dieser Verbindung mehr Stabilität und verbessert die Stellgenauigkeit, da die Kippneigung des Stößels aufgrund der kleineren relativen radialen Verschiebung reduziert wird.

Als weiterer Vorteil werden die Freiheitsgrade des Stößels durch eine axiale Führung der Stößelstege in den Freisegmenten des Ventileinsatzes eingeschränkt. Dadurch kann in vorteilhafter Weise eine Stößelrotation eingeschränkt und die Druckstellgenauigkeit verbessert werden.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass der Ventileinsatz mit mindestens drei Stegen ausgeführt ist, und der Stößel mit mindestens drei korrespondierenden Längsstegen ausgeführt ist, wobei die Winkel zwischen den einzelnen Stegen bzw. zwischen den einzelnen Längsstegen ungleich sind. Wenn die Winkel zwischen den mindestens drei Stegen nicht gleich sind, sondern unterschiedlich und nur in einer Winkelposition passend ausgeführt sind und mit einer Winkelkodierung des Ventilkörpers kombiniert sind, kann erzwungen werden, dass die Ventileinzelteile nur in einer definierten Winkellage zueinander montiert werden können. Das ist vorteilhaft für eine möglichst kleine Funktionsabweichung zwischen Ventilexemplaren, so dass die Chargenstreuung reduziert werden kann.

In Ausgestaltung der erfindungsgemäßen Ventilpatrone liegen die Längsstege des Stößels beispielsweise plan auf der Polfläche des Magnetankers auf. Alternativ greifen die Längsstege des Stößels in korrespondierende Vertiefungen der Polfläche des Magnetankers ein, so dass in vorteilhafter Weise eine Winkelzuordnung von Stößelsegmenten und korrespondierenden Vertiefungen in der Polfläche des Magnetankers erfolgen kann.

In weiterer Ausgestaltung der erfindungsgemäßen Ventilpatrone weist der Stößel eine angeformte umlaufende Auflage für eine Rückstellfeder auf, die sich auf einer Stirnseite des Ventilkörpers abstützt.

Die Längssegmente des Stößels können in Abstimmung mit einer Außenkontur des Ventileinsatzes beispielsweise im Wesentlichen eine Kreisabschnittform oder eine Wellenform oder eine Dreieckform aufweisen. Die Stößelform ist jedoch nicht auf diese Formen beschränkt sondern kann beliebige Formen annehmen. Durch die Stößelform kann beispielsweise ein Volumenausgleich zwischen Ober- und Unterseite des Ventileinsatzes verbessert werden, oder die Stößelführung zwischen der Kapsel und dem Ventileinsatz kann zweckmäßig beeinflusst und optimiert werden.

In weiterer Ausgestaltung der erfindungsgemäßen Ventilpatrone ist die Kapsel über eine Ventilbuchse an einem Verstemmbereich mit einem Fluidblock verstemmt, und der Ventilkörper mit dem Hauptventilsitz ist in die Kapsel eingefügt. Dadurch übernimmt die Kapsel auch die Dichtfunktion ab der Verstemmung der Ventilpatrone im Fluidblock. Da die Kapsel auch die Dichtfunktion nach außen vom Ventileinsatz übernimmt, kann die Ventilmontage in vorteilhafter Weise vereinfacht werden. Im Vergleich mit dem Stand der Technik ist eine Dichtschweißung zwischen der Kapsel und dem Ventileinsatz nicht mehr erforderlich. Daher können die dafür erforderlichen teuren Schweißanlagen und der zugehörige Prozessschritt entfallen. Die Verstemmkräfte nimmt die Ventilbuchse auf. Zudem kann der Ventilkörper mit dem Fluidblock fluiddicht verpresst werden.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine schematische Schnittdarstellung eines Ausführungsbeispiels einer erfindungsgemäßen Ventilpatrone für ein Magnetventil.
Fig. 3 zeigt eine schematische Schnittdarstellung entlang der Schnittlinie III-III in Fig. 2.
Fig. 4a zeigt eine perspektivische Darstellung eines Stößels für die Ventilpatrone aus Fig. 2 und 3.
Fig. 4b zeigt eine perspektivische Darstellung eines Ventileinsatzes für die Ventilpatrone aus Fig. 2 und 3.
Fig. 5a und 5b zeigen jeweils eine schematische Schnittdarstellung der Ventilpatrone entlang der Schnittlinie V-V in Fig. 2.
Fig. 6a und 6b zeigen jeweils eine schematische Schnittdarstellung des Stößels entlang der Schnittlinie VI-VI in Fig. 2.
Fig. 7 zeigt eine schematische Schnittdarstellung eines weiteren Ausführungsbeispiels einer erfindungsgemäßen Ventilpatrone für ein Magnetventil.

### Ausführungsformen der Erfindung

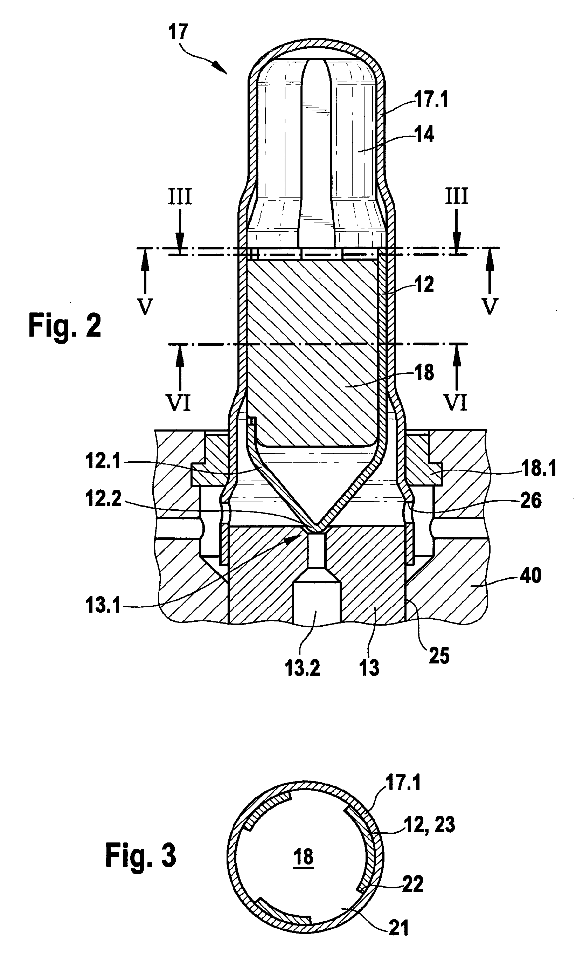

Wie aus Fig. 2 ersichtlich ist, umfasst eine erfindungsgemäße Ventilpatrone 17 für ein Magnetventil eine Kapsel 17.1, einen innerhalb der Kapsel 17.1 beweglich geführten Magnetanker 14, einen in die Kapsel 17.1 eingeschobenen Ventileinsatz 18 und einen Ventilkörper 13 mit einem Hauptventilsitz 13.1. Der Magnetanker 14 wird von einer Magnetkraft bewegt, die von einer nicht dargestellten Magnetbaugruppe erzeugt wird, die beispielsweise der in Fig. 1 dargestellten herkömmlichen Magnetbaugruppe 5 entspricht. Der Magnetanker 14 bewegt einen vom Ventileinsatz 18 geführten Stößel 12, der ein Schließelement 12.1 mit einem Dichtelement 12.2 aufweist, in Richtung des Ventilkörpers 13, um das Dichtelement 12.2 dichtend in den Hauptventilsitz 13.1 einzutauchen. Wie weiter aus Fig. 2 ersichtlich ist, ist die im Vergleich zur herkömmlichen Ventilpatrone 7 aus Fig. 1 verlängert ausgeführte Kapsel 17.1 der erfindungsgemäßen Ventilpatrone 17 über eine Ventilbuchse 18.1 an einem Verstemmbereich mit einem Fluidblock 40 verstemmt, und der Ventilkörper 13 mit dem Hauptventilsitz 13.1 ist in die Kapsel 17.1 eingefügt und mit dem Fluidblock 40 im Bereich 25 fluiddicht verpresst. Die Fluidzuführung erfolgt durch eine entsprechende Durchgangsbohrung 13.2 im Ventilkörper 13 und die Fluidabströmung aus der Ventilpatrone 17 erfolgt durch radiale Bohrungen 26 in der Kapsel 17.1.

Wie weiter aus Fig. 2 bis 4b ersichtlich ist, stützt sich der Ventileinsatz 18 im dargestellten Ausführungsbeispiel mit drei Stegen 21 radial an der Kapsel 17.1 ab, und der Stößel 12 ist über drei korrespondierende Längsstege 23 zwischen dem Ventileinsatz 18 und der Kapsel 17.1 radial geführt. Die Abmessungen der Stege 21 des Ventileinsatzes 18 und die Abmessungen der korrespondierenden Längsstege 23 des Stößels 12 sind aufeinander abgestimmt.

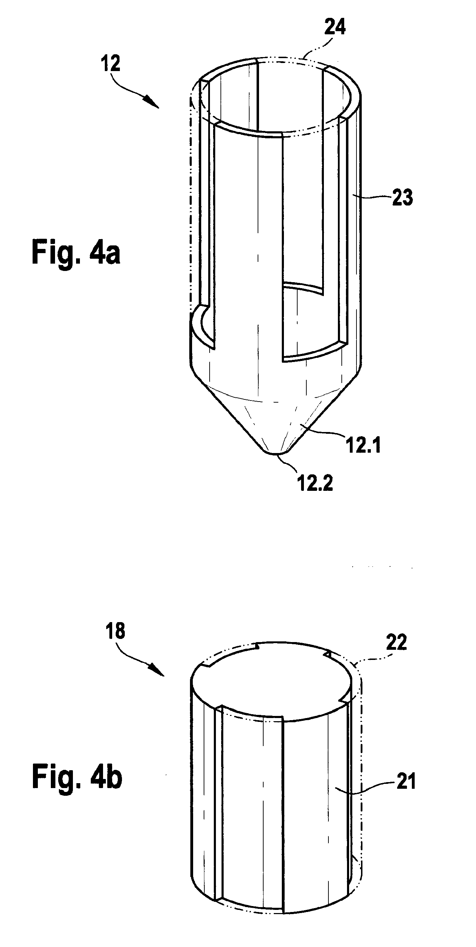

Der Kern der Erfindung besteht somit darein, den Stößel 12 außerhalb des Ventileinsatzes 18 liegend zu gestalten bzw. den Ventileinsatz 18 nach innen zu verlegen. Hierbei stützt sich der Ventileinsatz 18 nur noch an den Stegen 21 radial an der Kapsel 17.1 ab, um an diesen Stellen eine sehr gute Einkoppelung des von der nicht dargestellten Magnetbaugruppe erzeugten Magnetflusses zu ermöglichen. Der Stößel 12 dichtet analog zur herkömmlichen Ventilpatrone 7 aus Fig. 1 im Hauptventilsitz 13.1 des Ventilkörpers 13 ab und wird in den vom Ventileinsatz 18 freigelassenen Segmenten 22 über die Längsstege 23 bis zu einer Polfläche 14.1 des Magnetankers 14 geführt. Wie aus Fig. 3 und 4a ersichtlich ist, ist der Stößel 12 nicht vollständig rund ausgeführt, sondern weist Längsstege 23 bzw. freie Segmente 24 für die Stege 21 des Ventileinsatzes 18 auf. Dieses Ineinandergreifen des Stößels 12 und des Ventileinsatzes 18 ist insbesondere aus der Schnittdarstellung gemäß Fig. 3 ersichtlich.

Im Vergleich zur herkömmlichen Ventilpatrone 7 gemäß Fig. 1 weist die erfindungsgemäße Ventilpatrone eine größere wirksame Polfläche zwischen dem Ventileinsatz 18 und dem Magnetanker 14 mit einer größeren, verfügbaren Magnetkraft auf. Dies ermöglicht durch mehr Freiräume bei der Nutzung eines günstigen Magnetkraftarbeitspunktes eine günstigere Auslegung der Ventilpatrone 17 bzw. des zugehörigen Magnetventils bezuglich Druckstellbarkeit. Des Weiteren sind einfachere Teilegeometrien für den Ventileinsatz 18 und den Stößel 12 möglich. So ist der Stößel 12 durch seinen größeren Durchmesser beispielsweise besser für Metalltiefziehprozesse geeignet, wodurch die Präzision des Stößels 12, insbesondere an dem als Dichtkalotte ausgeführten Dichtelement 12.2 erhöht werden kann. Darüber hinaus ist der Auflagedurchmesser des Stößels 12 auf der Polfläche 14.1 des Magnetankers größer. Dies verleiht der Verbindung zwischen dem Magnetanker 14 und dem Stößel 12 mehr Stabilität und aufgrund einer kleineren radialen relativen Verschiebung eine reduzierte Kippneigung des Stößels 12. Dadurch wird insgesamt die Stellgenauigkeit der erfindungsgemäßen Ventilpatrone 17 verbessert.

Durch die axiale Führung der Längsstege 23 des Stößels 12 in den freien Segmenten 22 des Ventileinsatzes 18 bzw. der Stege 21 des Ventileinsatzes 18 in den freien Segmenten 24 des Stößels 12 werden die Freiheitsgrade des Stößel eingeschränkt, eine mögliche Rotation des Stößels 12 vermieden und die Druckstellgenauigkeit verbessert. Die Winkel zwischen den Stegen 23 bzw. zwischen den Segmenten 24 können gleich ausgeführt werden und bei drei vorhandenen Stegen 23 bzw. Segmenten 24 beispielsweise 120° betragen. Alternativ können die Winkel zwischen den Stegen 23 bzw. den Segmenten 24 unterschiedlich ausgeführt werden und bei drei vorhandenen Stegen 23 bzw. Segmenten 24 beispielsweise 118°, 120° und 122° betragen. Die Anordnung der Längsstege 23 des Stößels 12 und der Stege 21 des Ventileinsatzes 18 können so aufeinander abgestimmt sein, dass sie nur in einer Winkelposition ineinander passen. Dies kann mit einer Winkelkodierung des Ventilkörpers 13 kombiniert werden. Dadurch kann erzwungen werden, dass die Ventileinzelteile nur in einer definierten Winkellage zueinander montiert werden können. Das ist vorteilhaft um eine möglichst kleine Funktionsabweichung zwischen den Ventilexemplaren, d.h. eine kleine Chargenstreuung zu erzielen.

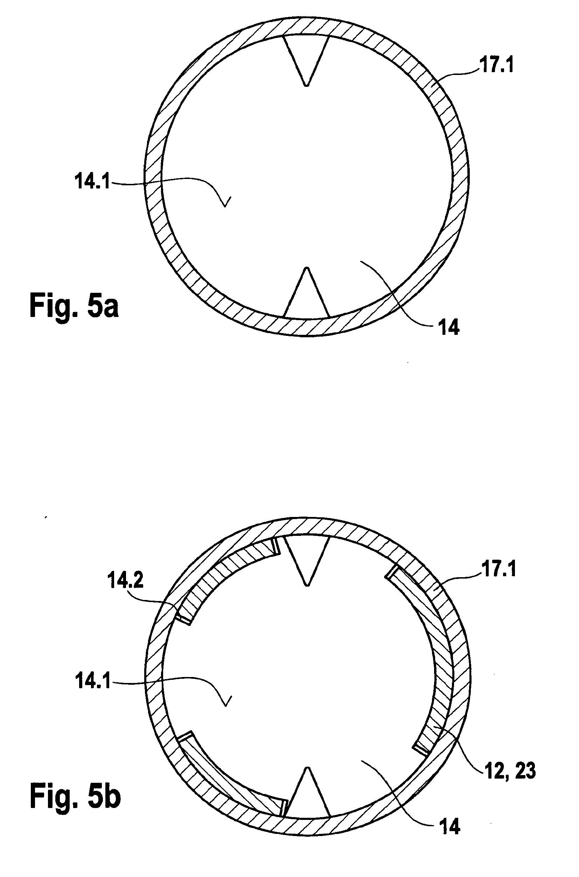

Wie aus den Schnittdarstellungen gemäß Fig. 5a und 5b ersichtlich ist, können die Längsstege 23 des Stößels 12 gemäß einer in Fig. 5a dargestellten Ausführungsform plan auf der Polfläche 14.1 des Magnetankers 14 aufliegen. Alternativ zu der Ausführungsform gemäß Fig. 5a mit plan auf der Polfläche 14.1 des Magnetankers 14 aufliegenden Stößelstegen 23 kann auch eine Winkelzuordnung der Stößelstege 23 und korrespondierenden Vertiefungen 14.2 in der Polfläche 14.1 des Magnetankers 14 erfolgen. Wie aus Fig. 5b ersichtlich ist, greifen die Längsstege 23 des Stößels 12 in die korrespondierenden Vertiefungen 14.2 der Polfläche 14.1 des Magnetankers 14 ein.

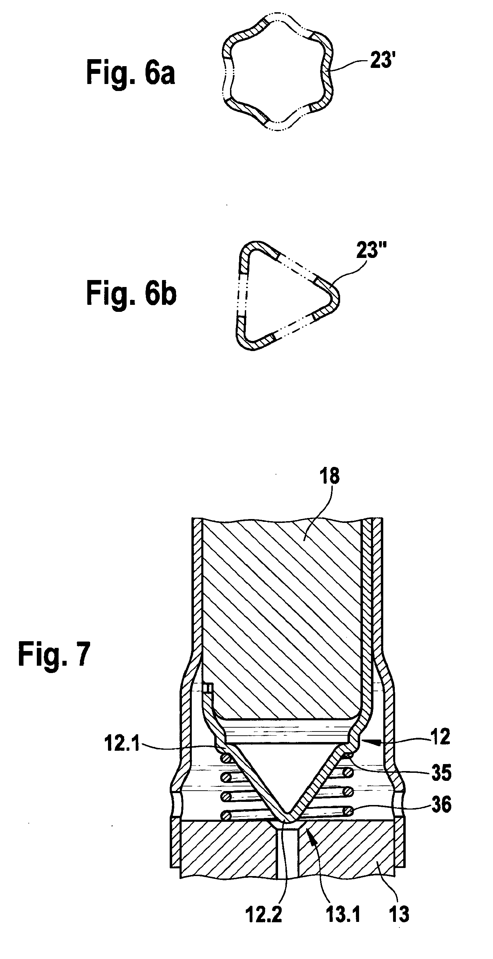

Wie aus den Schnittdarstellungen gemäß Fig. 6a und 6b ersichtlich ist, ist die Stößelfonn der Stege 23 und der freien Segmente 24 in Abstimmung mit einer Außenkontur des Ventileinsatzes 18 nicht auf eine Kreisform beschränkt, sondern es können beliebige Formen angenommen werden. So zeigt der Querschnitt gemäß Fig. 6a beispielsweise eine Wellenform der Stege 23', und der Querschnitt gemäß Fig. 6b zeigt alternativ eine Dreieckform der Stege 23". Dadurch kann beispielsweise ein Volumenausgleich zwischen Oberund Unterseite des Ventileinsatzes 18 verbessert werden, oder die Stößelführung zwischen der Kapsel 17.1 und dem Ventileinsatz 18 kann zweckmäßig beeinflusst werden.

Wie aus Fig. 7 ersichtlich ist, kann eine Ausführungsform der erfindungsgemäßen Ventilpatrone 17 eine Rückstellfeder 36 aufweisen, die sich auf einer als abgeformte, umlaufende Auflage 35 ausführten Federauflage am Stößel 12 und auf einer Stirnfläche des Ventilkörpers 13 abstützt. Die Rückstellfeder 36 hält im dargestellten Ausführungsbeispiel den Hauptventilsitz im stromlosen Zustand geöffnet.

Das Prinzip der erfindungsgemäßen Ventilpatrone 17 kann in stromlos offenen und stromlos geschlossenen Magnetventilen eingesetzt werden.

Die erfindungsgemäße Ventilpatrone macht die vorhandene Magnetkraft effektiver für die Stößelbewegung und das innere Kräftegleichgewicht des Magnetventils verfügbar. Außerdem werden die Stößel- und Ankerführung bei unveränderten oder ähnlichen Außenabmessungen der Ventilpatrone verbessert, indem Freiheitsgrade verringert werden. Durch die geänderten Teilegeometrien werden geänderte Fertigungsverfahren möglich, die in vorteilhafter Weise kostengünstigere und/oder präzisere Teile ergeben.

## Patentansprüche

1. Ventilpatrone für ein Magnetventil mit einer Kapsel (17.1), einem innerhalb der Kapsel (17.1) beweglich geführten Magnetanker (14), einem in die Kapsel (17.1) eingeschobenen Ventileinsatz (18) und einem Ventilkörper (13) mit einem Hauptventilsitz (13.1), wobei der von einer erzeugten Magnetkraft bewegte Magnetanker (14) einen vom Ventileinsatz (18) geführten Stößel (12) bewegt, der ein Schließelement (12.1) mit einem Dichtelement (12.2) aufweist, und wobei das Dichtelement (12.2) zur Ausführung einer Dichtfunktion dichtend in den Hauptventilsitz (13.1) eintaucht, **dadurch gekennzeichnet, dass** der Ventileinsatz (18) ausgeführt ist, um sich mit mindestens zwei Stegen (21) radial an der Kapsel (17.1) abzustützen, wobei der Stößel (12) über mindestens zwei korrespondierende Längsstege (23) zwischen dem Ventileinsatz (18) und der Kapsel (17.1) geführt ist, und wobei die Abmessungen der mindestens zwei Stege (21) des Ventileinsatzes (18) und die Abmessungen der mindestens zwei korrespondierenden Längsstege (23) des Stößels (12) aufeinander abgestimmt sind.

2. Ventilpatrone nach Anspruch 1, **dadurch gekennzeichnet, dass** der Ventileinsatz (18) mit mindestens drei Stegen (21) ausgeführt ist, und der Stößel (12) mit mindestens drei korrespondierenden Längsstegen (23) ausgeführt ist, wobei Winkel zwischen den einzelnen Stegen (21) bzw. zwischen den einzelnen Längsstegen (23) ungleich sind.

3. Ventilpatrone nach Anspruch 1 oder 2, **dadurch gekennzeichnet, dass** der Stößel (12) durch die zwischen den Stegen (21) in freien Segmenten (22) des Ventileinsatzes (18) angeordneten Längsstege (23) axial geführt ist.

4. Ventilpatrone nach einem der Ansprüche 1 bis 3, **dadurch gekennzeichnet, dass** die Längsstege (23) des Stößels (12) plan auf einer Polfläche (14.1) des Magnetankers (14) aufliegen.

5. Ventilpatrone nach einem der Ansprüche 1 bis 3, **dadurch gekennzeichnet, dass** die Längsstege (23) des Stößels (12) in korrespondierende Vertiefungen (14.2) der Polfläche (14.1) des Magnetankers (14) eingreifen.

6. Ventilpatrone nach einem der Ansprüche 1 bis 5, **dadurch gekennzeichnet, dass** der Stößel (12) eine angeformte umlaufende Auflage (35) für eine Rückstellfeder (36) aufweist, die sich auf einer Stirnseite des Ventilkörpers (13) abstützt.

7. Ventilpatrone nach einem der Ansprüche 1 bis 6, **dadurch gekennzeichnet, dass** die Längssegmente (23, 23', 23") des Stößels (12) in Abstimmung mit einer Außenkontur des Ventileinsatzes (18) im Wesentlichen eine Kreisabschnittform oder eine Wellenform oder eine Dreieckform aufweisen.

8. Magnetventil **gekennzeichnet durch** eine Ventilpatrone (17) nach einem der Ansprüche 1 bis 7.

9. Fluidblock mit einem Magnetventil gemäß Anspruch 8, **dadurch gekennzeichnet** die Kapsel (17.1) über eine Ventilbuchse (18.1) an einem Verstemmbereich mit dem Fluidblock (40) verstemmt ist, und der Ventilkörper (13) mit dem Hauptventilsitz (13.1) in die Kapsel (17.1) eingefügt ist.

10. Fluidblock mit einem Magnetventil nach Anspruch 8, **dadurch gekennzeichnet, dass** der Ventilkörper (13) mit dem Fluidblock (40) fluiddicht verpresst ist.

## Claims

1. Valve cartridge for a solenoid valve having a casing (17.1), a magnet armature (14) which is guided movably within the casing (17.1), a valve insert (18) which is pushed into the casing (17.1), and a valve body (13) with a main valve seat (13.1), the magnet armature (14) which is moved by a generated magnetic force moving a plunger (12) which is guided by the valve insert (18) and has a closing element (12.1) with a sealing element (12.2), and the sealing element (12.2) dipping sealingly into the main valve seat (13.1) in order to perform a sealing function, **characterized in that** the valve insert (18) is configured to be supported radially on the casing (17.1) by way of at least two webs (21), the plunger (12) being guided via at least two corresponding longitudinal webs (23) between the valve insert (18) and the casing (17.1), and the dimensions of the at least two webs (21) of the valve insert (18) and the dimensions of the at least two corresponding longitudinal webs (23) of the plunger (12) being adapted to one another.

2. Valve cartridge according to Claim 1, **characterized in that** the valve insert (18) is configured with at least three webs (21), and the plunger (12) is configured with at least three corresponding longitudinal webs (23), angles between the individual webs (21) and between the individual longitudinal webs (23) being unequal.

3. Valve cartridge according to Claim 1 or 2, **characterized in that** the plunger (12) is guided axially by the longitudinal webs (23) which are arranged between the webs (21) in free segments (22) of the valve insert (18).

4. Valve cartridge according to one of Claims 1 to 3, **characterized in that** the longitudinal webs (23) of the plunger (12) rest in a planar manner on a pole face (14.1) of the magnet armature (14).

5. Valve cartridge according to one of Claims 1 to 3, **characterized in that** the longitudinal webs (23) of the plunger (12) engage into corresponding depressions (14.2) of the pole face (14.1) of the magnet armature (14).

6. Valve cartridge according to one of Claims 1 to 5, **characterized in that** the plunger (12) has an integrally formed circumferential rest (35) for a restoring spring (36) which is supported on an end side of the valve body (13).

7. Valve cartridge according to one of Claims 1 to 6, **characterized in that** the longitudinal segments (23, 23', 23") of the plunger (12) have substantially a circular segment shape or an undulating shape or a triangular shape in coordination with an outer contour of the valve insert (18).

8. Solenoid valve, **characterized by** a valve cartridge (17) according to one of Claims 1 to 7.

9. Fluid block having a solenoid valve according to Claim 8, **characterized in that** the casing (17.1) is caulked to the fluid block (40) at a caulking region via a valve bushing (18.1), and the valve body (13) is inserted with the main valve seat (13.1) into the casing (17.1).

10. Fluid block having a solenoid valve according to Claim 8, **characterized in that** the valve body (13) is pressed together with the fluid block (40) in a fluid-tight manner.

## Revendications

1. Cartouche de vanne pour une électrovanne comprenant une capsule (17.1), une armature d'aimant (14) guidée de manière mobile à l'intérieur de la capsule (17.1), un insert de vanne (18) enfoncé dans la capsule (17.1) et un corps de vanne (13) avec un siège de vanne principal (13.1), l'armature d'aimant (14) déplacée par une force magnétique produite déplaçant un poussoir (12) guidé par l'insert de vanne (18), lequel poussoir présente un élément de fermeture (12.1) avec un élément d'étanchéité (12.2), et l'élément d'étanchéité (12.2) plongeant de manière hermétique dans le siège de vanne principal (13.1) pour assurer une fonction d'étanchéité, **caractérisée en ce que** l'insert de vanne (18) est réalisé de manière à s'appuyer avec au moins deux nervures (21) radialement contre la capsule (17.1), le poussoir (12) étant guidé par le biais d'au moins deux nervures longitudinales correspondantes (23) entre l'insert de vanne (18) et la capsule (17.1), et les dimensions des au moins deux nervures (21) de l'insert de vanne (18) et les dimensions des au moins deux nervures longitudinales correspondantes (23) du poussoir (12) étant adaptées les unes aux autres.

2. Cartouche de vanne selon la revendication 1, **caractérisée en ce que** l'insert de vanne (18) est réalisé avec au moins trois nervures (21) et le poussoir (12) est réalisé avec au moins trois nervures longitudinales correspondantes (23), les angles entre les nervures individuelles (21) ou entre les nervures longitudinales individuelles (23) n'étant pas identiques.

3. Cartouche de vanne selon la revendication 1 ou 2, **caractérisée en ce que** le poussoir (12) est guidé axialement par les nervures longitudinales (23) disposées entre les nervures (21) dans des segments libres (22) de l'insert de vanne (18).

4. Cartouche de vanne selon l'une quelconque des revendications 1 à 3, **caractérisée en ce que** les nervures longitudinales (23) du poussoir (12) s'appliquent à plat sur une surface polaire (14.1) de l'armature d'aimant (14).

5. Cartouche de vanne selon l'une quelconque des revendications 1 à 3, **caractérisée en ce que** les nervures longitudinales (23) du poussoir (12) viennent en prise dans des renfoncements correspondants (14.2) de la surface polaire (14.1) de l'armature d'aimant (14).

6. Cartouche de vanne selon l'une quelconque des revendications 1 à 5, **caractérisée en ce que** le poussoir (12) présente un support (35) périphérique façonné pour un ressort de rappel (36) qui s'appuie sur un côté frontal du corps de vanne (13).

7. Cartouche de vanne selon l'une quelconque des revendications 1 à 6, **caractérisée en ce que** les segments longitudinaux (23, 23', 23") du poussoir (12) en correspondance avec un contour extérieur de l'insert de vanne (18) présentent essentiellement une forme de segment de cercle ou une forme ondulée ou une forme triangulaire.

8. Électrovanne, **caractérisée par** une cartouche de vanne (17) selon l'une quelconque des revendications 1 à 7.

9. Bloc fluidique comprenant une électrovanne selon la revendication 8, **caractérisé en ce que** la capsule (17.1) est matée avec le bloc fluidique (40) par le biais d'une douille de vanne (18.1) au niveau d'une région de matage, et le corps de vanne (13) est introduit avec le siège de vanne principal (13.1) dans la capsule (17.1).

10. Bloc fluidique comprenant une électrovanne selon la revendication 8, **caractérisé en ce que** le corps de soupape (13) est pressé de manière étanche aux fluides avec le bloc fluidique (40).
